# EUROPÄISCHE PATENTSCHRIFT

(11) **EP 0 339 740 B1**
(45) Veröffentlichungstag und Bekanntmachung des Hinweises auf die Patenterteilung: **23.09.1998**
(21) Anmeldenummer: 89201056.2
(22) Anmeldetag: 24.04.1989
(51) Int. Cl.: H04L 12/56, H04Q 7/38

(54) **Verfahren zum Erteilen einer Zugriffsberechtigung für ein Nachrichtenübertragungssystem**
Method for authorizing access to a communication system
Procédé pour autoriser une demande d'accès dans un système de communication

(30) Priorität: 28.04.1988 DE 3814355
(43) Veröffentlichungstag der Anmeldung: 02.11.1989
(73) Patentinhaber: LUCENT TECHNOLOGIES INC., Murray Hill, New Jersey 07974-0636 (US)
(72) Erfinder: Eizenhöfer, Alfons, Dr. Ing., D-8503 Altdorf (DE); von Harten, Georg, Dipl.-Ing., D-8500 Nürnberg 10 (DE)
(74) Vertreter: Johnston, Kenneth Graham

(56) Entgegenhaltungen:
- EP-A- 73 014
- GB-A- 2 063 011

## Beschreibung

Die Erfindung betrifft ein Verfahren zum Erteilen einer Zugriffsberechtigung für ein Nachrichtenübertragungssystem, insbesondere ein Funkübertragungssystem mit mindestens einer zentralen Einrichtung und mit einer Vielzahl voneinander unabhängiger Teilnehmerstationen, wobei eine Teilnehmerstation nach Aussenden eines Zugriffswunsches eine von der zentralen Einrichtung zu erteilende Zugriffsberechtigung erwartet.

Aus DE-OS 31 33 347.8 ist ein Verfahren zum Zugreifen auf Übertragungskanäle eines Nachrichtenübertragungssystems mit mindestens einer zentralen Einrichtung, mit mindestens einem Duplex-Übertragungskanal und einer Vielzahl voneinander unabhängiger Teilnehmerstationen, bei dem jede Teilnehmerstation nach einem Vielfachzugriff-Verfahren auf den Duplex-Übertragungskanal zugreifen kann, bekannt.

Das in dieser Schrift beschriebene Nachrichtensystem ist ein System zur Übertragung von Nachrichten über Funkstrecken mit ortsfesten Funkstationen und beweglichen Teilnehmerstationen. Dabei ist jeder ortsfesten Funkstation (zentralen Einrichtung) ein Satz von Duplex-Übertragungskanälen zugeordnet. Einer (der Organisationskanal) wird zur Übertragung von Steuerungsinformationen für den Betriebsablauf und die übrigen (die Sprechkanäle) werden zur Sprachübertragung verwendet.

Im folgenden wird der erste Kanal des Organisationskanales, auf dem die Teilnehmerstationen ihre Steuerinformationen zur zentralen Einrichtung übertragen, als Hinkanal, der zweite Kanal, auf dem die zentrale Einrichtung ihre Steuerinformationen an die Teilnehmerstationen über trägt, als Rückkanal bezeichnet. Hin- und Rückkanal des Organisationskanals sind in Zeitschlitze unterteilt, wobei die Zeitschlitze des Hinkanals zur besseren Ausnutzung wiederum in eine Anzahl von Rufschlitzen unterteilt werden können. Zur Einleitung des Aufbaus eines Gespräches mit einem Fernsprechteilnehmer eines Telefonnetzes oder einer anderen Teilnehmerstation, welches von einer Teilnehmerstation ausgeht, wählt die Teilnehmerstation zufallsbedingt einen dieser Rufschlitze aus. Um die Nutzbarkeit des Hinkanales zu erhöhen, sendet sie jedoch nicht ihre volle Identifizierung, deren Signallänge mehrere Rufschlitze beanspruchen würde, sondern ein allen Teilnehmerstationen gleiches Signalisierungskurzzeichen.

Dieses Signalisierungskurzzeichen teilt der zentralen Einrichtung mit, daß ein Wunsch zum Aufbau eines Gespräches seitens einer Teilnehmerstation besteht. Sind innerhalb eines Zeitschlitzes von der zentralen Einrichtung mehrere Signalisierungskurzzeichen empfangen worden, so wird von der zentralen Einrichtung eine dieser Teilnehmerstationen ausgewählt, wobei diese Teilnehmerstation durch die Nummer des Rufschlitzes, in welcher sie gesendet hatte, eindeutig bestimmbar ist. Daraufhin sendet die zentrale Einheit eine Aufforderung an die Teilnehmerstation sich zu identifizieren. In dieser Aufforderung ist die Nummer des Rufschlitzes enthalten, in der diese Teilnehmerstation ihr Signalisierungskurzzeichen gesendet hatte. Hierdurch wird die Gefahr von Zugriffszerstörungen und damit derjenige Zeitanteil, für den der Hinkanal des Organisationskanales nur gering nutzbar ist, durch die Verkürzung der Zeitdauer der einzelnen Zugriffswünsche verringert.

Jede Teilnehmerstation, welche in einem Rufschlitz ein Signalisierungskurzzeichen gesendet hatte und nach Ablauf einer vorgebbaren Zeitspanne nicht zur Sendung ihrer vollständigen Identifizierung aufgefordert wird, muß ihren Zugriffswunsch durch erneute Aussendung ihres Signalisierungskurzzeichens wiederholen.

Der Hin- und Rückkanal des in der eingangs genannten Schrift beschriebenen Duplex-Übertragungskanals wird durch zwei voneinander verschiedene Frequenzen gebildet. Duplex-Übertragungskanäle können jedoch auch durch Zeitlagen gebildet werden, wobei jedem Kanal ein Zeitschlitz zugeordnet ist und mehrere Zeitschlitze in einem Zeitrahmen zusammengefaßt sind. Die Zeitrahmen können sowohl nur in einer einzigen Frequenzlage als auch in mehreren Frequenzlagen organisiert sein.

Aufgabe der vorliegenden Erfindung ist es, ein Verfahren der eingangs genannten Art so zu verbessern, daß Zugriffszeiten verkürzt und die Belastbarkeit des Organisationskanales erhöht werden kann.

Diese Aufgabe wird bei einem Verfahren der eingangs genannten Art dadurch gelöst, daß die Teilnehmerstation ihren Zugriffswunsch wiederholt, sobald festgestellt wird, daß eine andere Teilnehmerstation, die ihren Zugriffswunsch später abgesandt hat, eine Zugriffsberechtigung erhält.

Der abhängige Patentanspruch 2 gibt eine Ausgestaltung der Erfindung an, bei der die Teilnehmerstationen in verschiedene Prioritätsklassen eingestuft sind.

Die abhängigen Ansprüche 3 und 4 geben eine Ausgestaltung des Verfahrens an, bei dem durch die Art und Weise der Zugriffsberechtigungen eine Laststeuerung innerhalb der zentralen Einrichtung ermöglicht wird.

Weitere vorteihafte Ausgestaltungen der Erfindung sind Gegenstand der weiteren abhängigen Ansprüche.

Ausführungsbeispiele beschreiben die Erfindung. Anhand der in den Figuren dargestellten Zeichnung werden weitere Einzelheiten beschrieben und erläutert.

Es zeigen in schematischer Darstellung:
- Fig. 1: einen Zeitabschnitt des Organisationskanales.
- Fig. 2: ein Blockschaltbild einer Mobilstation.
- Fig. 3: ein weiteres Blockschaltbild einer Mobilstation.
- Fig. 4: ein weiteres Blockschaltbild einer Mobilstation.

Eine bevorzugte Ausgestaltung eines Nachrichtenübertragungssystems mit mindestens einer zentralen Einrichtung und mit einer Vielzahl voneinander unabhängiger Teilnehmerstationen, wobei eine Teilnehmerstation nach Aussenden eines Zugriffswunsches eine von der zentralen Einrichtung zu erteilende Zugriffsberechtigung erwartet, ist ein Funktelefonsystem mit ortsveränderbaren Teilnehmerstationen. Die Anwendung der Erfindung ist jedoch nicht auf ein solches Funktelefonsystem beschränkt, sondern ist zum Beispiel auch bei Satelittenkommunikationssystemen oder auch bei miteinander vernetzten Computern für ein "Local Area Network" anwendbar.

Bei dem geschilderten Funktelefonsystem bewegen sich im Funkempfangsbereich einer zentralen Einrichtung, welche im folgenden als Basisstation bezeichnet wird, eine Vielzahl voneinander unabhängiger Teilnehmerstationen, im folgenden als Mobilstationen bezeichnet. Der Funkempfangsbereich der Basisstation ist beispielsweise die Funkzelle eines zellular aufgebauten Autotelefonnetzes, wie zum Beispiel dem geplanten paneuropäischen D-Netz. Der Funkverkehr zwischen den Mobilstationen und der Basisstation findet auf einer begrenzten Anzahl von Duplex-Übertragungskanälen statt. Einer dieser Duplex-Übertragungskanäle ist als Organisationskanal ausgebildet.

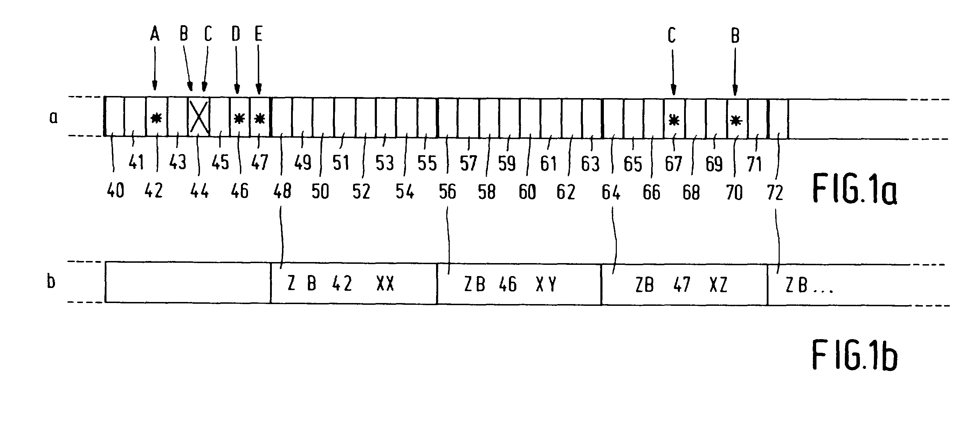

Fig. 1 zeigt in einem zeitlichen Ausschnitt den Dialog auf dem Organisationskanal. Der Organisationskanal ist in Zeitschlitze unterteilt. Zeile a in Fig. 1 zeigt den Hinkanal des Organisationskanals, auf welchem die Mobilstationen senden und Zeile b in Fig. 1 zeigt den Rückkanal, auf welchem die Basisstation sendet. Alle Mobilstationen, welche einen Gesprächsaufbau durchführen wollen, befinden sich zunächst in der sogenannten Rufphase, in welcher sie einen Zugriffswunsch auf dem Hinkanal aussenden.

Da bei mehreren gleichzeitig gesendeten Zugriffswünschen sich diese Zugriffswünsche überdecken würden und sich so höchstens ein Zugriffswunsch pro Zeitschlitz durchsetzen könnte, ist jeder Zeitschlitz in acht Rufschlitze unterteilt. Mittels von der Basisstation gesendeten Synchronisationssignalen ist jeder Rufschlitz fortlaufend durchnumeriert. Anhand dieser Rufschlitznummer ist jeder Rufschlitz sowohl für die Basisstation wie für alle Mobilfunkstationen eindeutig unterscheidbar. Da die Zahl der Rufschlitznummern mit der Zeit zu groß wird, wird im Ausführungsbeispiel nach Erreichen eines festlegbaren Höchstwertes die Numerierung des nächsten Rufschlitzes wieder mit der Nummer Null begonnen.

Der Zugriffswunsch einer Mobilstation besteht aus einem Signalisierungskurzzeichen, dessen Signal länge zur Aussendung nur einen Rufschlitz benötigt. In welchen Rufschlitz jede Mobilstation sendet, wird durch einen in der Mobilstation angeordneten Zufallsgenerator festgelegt. Auf diese Weise besteht eine hohe Wahrscheinlichkeit dafür, daß bei mehreren Zugriffswünschen einige Zugriffswünsche die Basisstationen konfliktfrei erreichen. In Zeile a der Fig. 1 sendet im Rufschlitz Nr. 42 eine Mobilstation A, im Rufschlitz Nr. 46 eine Mobilstation D und im Rufschlitz Nr. 47 eine Mobilstation E. Im Rufschlitz Nr. 44 haben zwei Mobilstationen B und C gleichzeitig einen Zugriffswunsch gesendet. Gehen beide Zugriffswünsche mit annähernd gleichen Feldstärken bei der Basisstation ein, so entsteht ein Zugriffskonflikt, im Zeitschlitz Nr. 44 mit X markiert. Zugriffskonflikte werden von der Basisstation ignoriert.

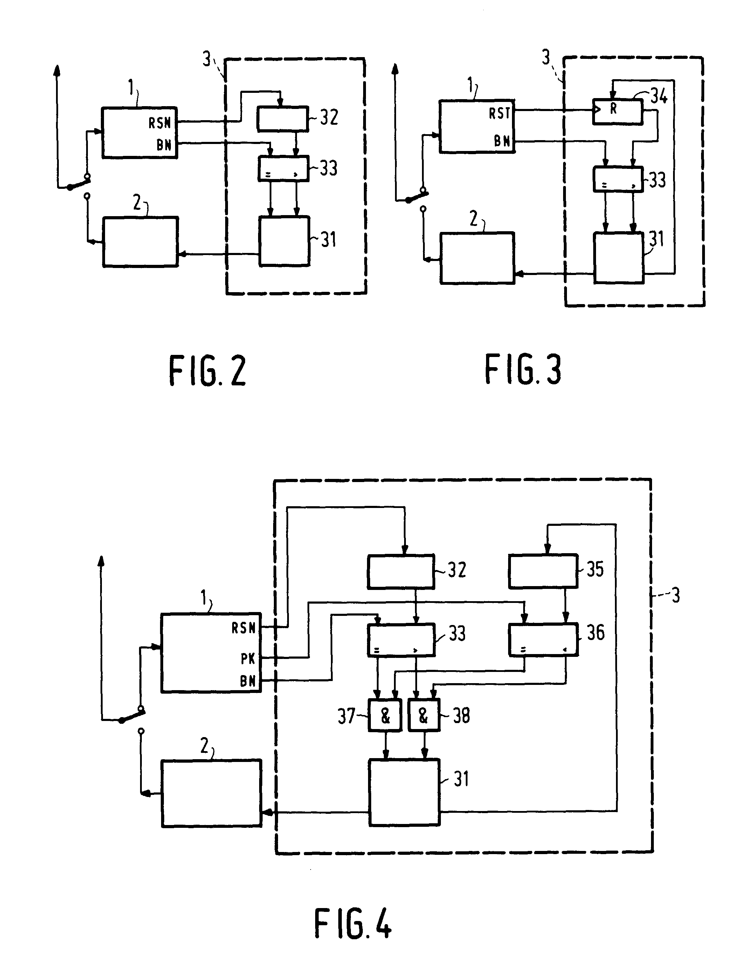

Fig. 2 zeigt ein Blockschaltbild einer aus einem Empfangsteil 1 und einem Sendeteil 2 und einer Auswerteeinrichtung 3 aufgebauten Mobilstation. Durch eine in der Auswerteeinrichtung 3 angeordnete Ablaufsteuerung 31 wird die Aussendung des Zugriffswunsches ausgelöst. Eine im Empfangsteil 1 angeordnete und nicht dargestellte Synchronisationseinrichtung liefert am Ausgang RSN des Empfangsteiles 1 die augenblickliche von der Basisstation vergebene Rufschlitznummer. Mit der Aussendung des Zugriffswunsches wird diese aktuelle Rufschlitznummer in einem Register 32 gespeichert. Auf diese Weise merkt sich jede Mobilstation die Rufschlitznummer, in welcher sie ihren Zugriffswunsch ausgesandt hat. So enthält das Register 32 der Mobilstation A die Rufschlitznummer 42, die Register der Mobilstationen B und C die Rufschlitznummern 44 und so weiter.

Nach dem Aussenden des Zugriffswunsches werden die Mobilstationen durch die Ablaufsteuerung 31 von der Rufphase in die Wartephase versetzt. In der Wartephase erwarten sie eine von der Basisstation an sie gerichtete Zugriffsberechtigung, mit der ihnen ein Sprechkanal zugeteilt wird, auf dem sie den Gesprächsaufbau fortsetzen können.

Die von der Basisstation empfangenen konfliktfreien Zugriffswünsche, in der Zeile a der Figur 1 mit * markiert, werden in der Reihenfolge ihres Eintreffens abgearbeitet. Da das empfangene Signalisierungskurzzeichen keine Informationen über die Teilnehmerstation enthält, welche das Signalisierungskurzzeichen ausgesandt hat, dient die zum Zeitpunkt des Empfanges eines Signalisierungskurzzeichens jeweils von der Baisstation vergebene Rufschlitznummer als Unterscheidungshilfsmittel zwischen den rufenden Mobilstationen. Jeder Zugriffswunsch wird in der Basisstation in einer Datei mit dieser Rufschlitznummer verwaltet.

Da diese gespeicherte Rufschlitznummer gleichzeitig zur Bildung der Rangfolge, in welcher die Mobilstationen ihre Zugriffsberechtigungen zugeteilt bekommen, dient, werden diese von der Basisstation verwalteten Rufschlitznummern im folgenden als Berechtigungsnummern bezeichnet.

Von der Basisstation wird nun in der Reihenfolge des Eingangs der konfliktfreien Zugriffswünsche nacheinander eine Zugriffsberechtigung ZB an die Mobilstationen A, D und E gesandt. Hierzu enthält jede Zugriffsberechtigung die dem jeweiligen Zugriffswunsch zugeordnete Berechtigungsnummer. Im Zeitschlitz, welcher mit dem Rufschlitz Nr. 48 beginnt, sendet die Basisstation daher eine Zugriffsberechtigung ZB, welche die Berechtigungsnummer 42 und die Kanalnummer XX eines freien Sprechkanals enthält.

Die in der Zugriffsberechtigung enthaltene Rufschlitznummer wird von allen in der Wartephase befindlichen Mobilstationen A, B, C, D und E ausgewertet und an einem weiteren Ausgang BN des Empfangsteiles 1 weitergeleitet. Dieser Ausgang BN ist mit einem ersten Eingang eines Vergleichers 33 verbunden. Ein zweiter Eingang des Vergleichers 33 ist mit dem Ausgang des Registers 32 verbunden. Der Vergleicher 33 besitzt zwei Ausgänge, welche mit der Ablaufsteuerung 31 verbunden sind. Stimmen die beiden an seinem Ausgang anliegenden Zahlenwerte überein, so gibt er ein Signal an seinen ersten Ausgang ab. Überschreitet der Zahlenwert an seinem ersten Eingang den Zahlenwert, welcher an seinem zweiten Eingang anliegt, so gibt er ein Signal an seinen zweiten Ausgang ab.

Auf diese Weise vergleichen alle sich in der Wartephase befindlichen Mobilstationen A, B, C, D und E die mit der Zugriffsberechtigung empfangene Berechtigungsnummer mit ihrer jeweiligen im Register 32 gespeicherten Rufschlitznummer. Allein die Mobilstation A stellt eine Übereinstimmung dieser beiden Nummern fest. Durch das Signal am ersten Ausgang des Vergleichers 33 wird die Ablaufsteuerung 31 angewiesen, die Wartephase zu verlassen und den Gesprächsaufbau mit der Basisstation auf dem ihr in der Zugriffsberechtigung zugewiesenen Sprechkanal XX weiter fortzuführen.

Alle Mobilstationen die Zugriffsberechtigungen empfangen, welche eine Berechtigungsnummer enthalten, welche niedriger ist als die gespeicherte Rufschlitznummer, verbleiben in der Wartephase. Dies sind die Mobilstationen B, C, D und E. Während der Wartephase senden sie keinen erneuten Zugriffswunsch aus. Auf diese Weise wird der Organisationskanal durch die in der Wartephase befindlichen Mobilstationen nicht belegt, auch dann nicht, wenn sie, bedingt durch eine große Anzahl von Zugriffswünschen weiterer Mobilstationen, längere Zeit warten müssen. Dies hat den Vorteil, daß die Belastung des Organisationskanals gerade in den Zeiten mit sehr vielen Zugriffswünschen so gering wie möglich gehalten werden kann und dadurch weniger Zugriffskollisionen von rufenden Mobilstationen zu erwarten sind.

Die nächste in der von der Basisstation verwalteten empfangenen Zugriffswünsche zugeordnete Berechtigungsnummer hat den Zahlenwert 46. Die nächste Zugriffsberechtigung, welche von der Basisstation im Zeitschlitz, welcher mit dem Rufschlitz Nr. 56 beginnt, gesendet wird, enthält daher die Berechtigungsnummer 46 und die Kanalnummer XY eines freien Sprechkanales. Die Mobilstation D weiß daraufhin, daß sie ihren Gesprächsaufbau auf dem in der Zugriffsberechtigung angegebenen Sprechkanal XY fortführen darf.

Durch den Vergleich der Berechtigungsnummer 46 mit der eigenen gespeicherten Rufschlitznummer 44 stellen die Mobilstationen B und C fest, daß sie übergangen worden sind. Das ist für sie das Kennzeichen, daß ihr Zugriffswunsch von der Basisstation nicht empfangen werden konnte. Erst jetzt verlassen beide Mobilstationen B und C durch das Ausgangssignal des zweiten Ausganges des Vergleichers 33 ihre Wartephase und werden durch die Ablaufsteuerung 31 wieder in die Rufphase zurückgesetzt. In einem der folgenden Rufschlitze senden sie wieder einen Zugriffswunsch aus. Auf Grund des in der Ablaufsteuerung angeordneten Zufallsgenerators senden die Mobilstationen B und C mit großer Wahrscheinlichkeit dann jedoch in verschiedenen Rufschlitzen, beispielsweise in den Rufschlitzen Nr. 67 und Nr. 70, und vermeiden so, zumindest untereinander, einen Zugriffskonflikt.

Auf diese Weise wird verhindert, daß Mobilstationen, deren Zugriffswünsche die Basisstation nicht erreichen konnten, dies selbst feststellen können und erneut einen Zugriffswunsch aussenden. In vorteilhafter Weise senden jedoch nur diejenigen Mobilstationen, unabhängig davon wie lange sie schon auf eine Zugriffsberechtigung warten, dann einen erneuten Zugriffswunsch aus, wenn deren Zugriffswunsch tatsächlich nicht die Basisstation erreicht hat. Weiterhin muß die Zugriffsberechtigung für Steuerung der in der Wartephase befindlichen Mobilstationen keine zusätzlichen Informationen enthalten, so daß die Belegung des Rückkanales hierdurch nicht vergrößert wird. Die Belastung des Hinkanales und die Anzahl der Zugriffskollisionen wird hingegen verringert.

Mit der beschriebenen Anordnung ist eine sogenannte Laststeuerung des Funktelefonnetzes möglich. Treffen bei der Basisstation sehr viele Zugriffswünsche von Mobilstationen ein, so veranlaßt die Basisstation, daß die Aussendung der Zugriffsberechtigungen verzögert wird, ohne daß zu befürchten ist, daß die in der Wartephase befindlichen Mobilstationen durch erneute Zugriffswünsche den Hinkanal zustopfen.

In einer weiteren, nicht dargestellten, Ausgestaltung der Erfindung ist in jeder Mobilstation eine Zeitgeberschaltung angeordnet. Diese Zeitgeberschaltung wird mit der Aussendung eines Zugriffswunsches gestartet. Erhält die Mobilstation aufgrund ihres Zugriffswunsches eine für sie bestimmte Zugriffsberechtigung, so wird die Zeitgeberschaltung zurückgesetzt. Läuft die mittels der Zeitgeberschaltung vorgegebene Zeit innerhalb der Wartephase aus, so wird die Mobilstation durch die Zeitgeberschaltung erneut in die Rufphase zurückgesetzt. Auf diese Weise wird gewährleistet, daß Mobilstationen, deren Zugriffswunsch verloren gegangen ist und die dies nicht feststellen können, weil in der Zwischenzeit keine Zugriffsberechtigungen vergeben werden, nach Ablauf einer vorgebbaren Wartezeit erneut einen Zugriffswunsch aussenden. Die vorgebbare Zeitdauer dieser Zeitgeberschaltung ist abhängig von der geplanten Belastung des Organisationskanales. Sie liegt im Ausführungsbeispiel in der Größenordnung von zehn Sekunden.

In einer weiteren Ausgestaltung der Erfindung sendet die Basisstation in größeren Zeitabständen eine Zugriffsberechtigung mit der augenblicklichen Rufschlitznummer aus. Da dieser Zugriffsberechtigung kein Zugriffswunsch vorangegangen ist, wird sie als Pseudozugriffsberechtigung bezeichnet. Auf diese Weise wird gewährleistet, daß auch in Zeiten, in welchen nur eine geringe Zahl oder überhaupt keine Zugriffswünsche empfangen werden, Mobilstationen, deren Zugriffswunsch nicht empfangen werden konnte, mit dieser Pseudozugriffsberechtigung eine Berechtigungsnummer erhalten, anhand derer sie den Verlust ihres Zugriffswunsches erkennen können und daraufhin einen neuen Zugriffswunsch absenden. Das Aussenden einer solchen Pseudozugriffsberechtigung bietet den Vorteil, daß der Schaltungsaufwand für die in jeder Mobilstation angeordnete Zeitgeberschaltung entfallen kann und die Erkennung eines Rufverlustes allein mit der bereits geschilderten Schaltungsanordnung zur Erkennung einer Zugriffsberechtigung möglich ist.

Die Zugriffsreihenfolge der Mobilstationen des beschriebenen Funktelefonsystems orientiert sich an einer absoluten Numerierung der Rufschlitze über von der Basisstation beispielsweise in Synchronisationssignalen übermittelten Rufschlitznummern. Als absolute Numerierung kann aber auch beispielsweise die Systemzeit des Funktelefonsystems verwendet werden.

In der im folgenden beschriebenen Schaltungsanordnung wird anstelle einer absoluten Numerierung eine relative Numerierung verwendet. Zur relativen Numerierung eines Zugriffswunsches wird der Zeitabstand zwischen dem Zugriffswunsch und der empfangenen Zugriffsberechtigung oder eine dazu gleichwertige Größe, beispielsweise die Anzahl der dazwischenliegenden Zeitschlitze, verwendet.

In der in Fig. 3 dargestellten Mobilstation erzeugt eine in dem Synchronisationsteil des Empfangsteiles 1 enthaltene Taktgeberschaltung jeweils zu Beginn eines Rufschlitzes einen Ausgangsimpuls, welcher über den Ausgang RST des Empfangsteiles 1 einem Zähler 34 zugeführt ist. Die Taktgeberschaltung ist mit der Basisstation synchronisiert. Eine solche Taktgeberschaltung ist üblicherweise bereits in jeder Mobilstation vorhanden, um das zeitsynchrone Aussenden, beispielsweise des Zugriffswunsches, zu gewährleisten. Ein Rückstelleingang R des Zählers 34 ist mit der Ablaufsteuerung 31, welche in Funktion und Aufbau der in Fig. 2 dargestellten Ablaufsteuerung entspricht, verbunden. Durch das am Rückstelleingang des Zählers 34 anliegende Signal der Ablaufsteuerung bleibt der Zählerausgang des Zählers 34 solange auf Null, bis die Ablaufsteuerung 31 einen Zugriffswunsch abgesandt hat. Nun erhöht sich bei jedem Taktimpuls am Zähleingang der Zählerstand des Zählers 34 jeweils um Eins. Der Zählerausgang des Zählers 34 ist mit dem ersten Eingang eines Vergleichers 33 verbunden. Mittels der im Empfangsteil 1 enthaltenen Auswerteschaltung ist dem zweiten Eingang des Vergleichers 33 über den Ausgang BN des Empfangsteiles 1 die in der jeweiligen empfangenen Zugriffsberechtigung enthaltene Berechtigungsnummer zugeführt. Der Vergleicher 33 erzeugt zwei Ausgangssignale. An seinem ersten Ausgang wird ein Ausgangssignal erzeugt, wenn der Zählerstand des Zählers 34 und die Berechtigungszahl übereinstimmen. Aus seinem zweiten Ausgang wird ein Ausgangssignal erzeugt, wenn der Zählerstand des Zählers 34 größer ist als die empfangene Berechtigungsnummer. Diese beiden Signale sind der Ablaufsteuerung 31 zugeführt und veranlassen die bereits beschriebenen Zustandsänderungen wie Rufphase, Wartephase usw.. Bei Aussendung eines Zugriffswunsches beginnt der Zähler 34 mit der Zählung der verstrichenen Rufzeitschlitze. Bei der Aussendung einer Zugriffsberechtigung vermerkt die Basisstation in der Zugriffsberechtigung die Anzahl der Rufschlitze, die zwischen dem Empfang des diese Zugriffsberechtigung auslösenden Zugriffswunsches und der Aussendung der Zugriffsberechtigung liegt. Hierzu wird im Ausführungsbeispiel in der Basisstation gleichzeitig mit der Speicherung des Zugriffswunsches die gerade aktuelle Rufschlitznummer gespeichert. Bei der Aussendung der Zugriffsberechtigung wird die Anzahl der vergangenen Rufschlitze aus der Differenz der nun aktuellen Rufschlitznummer und der gespeicherten Rufschlitznummer ermittelt.

Die relative Numerierung hat gegenüber der absoluten Numerierung den Vorteil, daß der Aufwand in der Mobilstation verringert werden kann, da aus den empfangenen Synchronisationssignalen nur ein Rufschlitztaktsignal abgeleitet werden muß, welches ohnehin schon zur Synchronisation der Rufschlitze benötigt wird. Hierdurch brauchen die Synchronisationssignale nicht die Rufschlitznummer enthalten. Dies führt zu einer Verringerung der mit den Synchronisationssignalen zu übertragenden Daten sowie zu einer Verringerung des gesamten Systemaufwandes.

Aufgrund von Signalverarbeitungszeiten kann sich die Aussendung der Zugriffsberechtigung um einige Zeitschlitze verschieben. Die hierdurch nötige Korrektur um die Anzahl der Rufschlitze, welche zwischen der Berechnung der Anzahl der Rufschlitze und dem Aussenden der Zugriffsberechtigung liegt, muß entsprechend berücksichtigt werden. Dies geschieht am einfachsten dadurch, daß bei Berechnung der Anzahl der Rufschlitze in der Basisstation ein entsprechender Korrekturwert hinzuaddiert wird.

Bei dem geschilderten Funktelefonsystem sind alle Mobilstationen untereinander gleichberechtigt. Die Zugriffsberechtigungen werden daher in der Reihenfolge des Eingangs der Zugriffswünsche erteilt.

In einer weiteren Ausgestaltung der Erfindung sind die Mobilstationen in verschiedene Prioritätsklassen unterteilt. Eine Mobilstation mit einer höheren Priorität muß ihre Zugriffsberechtigung vor einer Mobilstation mit einer niedrigeren Priorität erhalten. Es ist jedoch auch möglich, daß die Priorität einer Mobilstation von Zugriffswunsch zu Zugriffswunsch unterschiedlich sein kann. Beispielsweise kann jede Mobilstation, unabhängig davon, welcher Prioritätsklasse sie angehört, für einen Notruf die höchste Priorität beanspruchen.

Fig. 4 zeigt ein Blockschaltbild einer Mobilstation, bei welcher solche Prioritätsklassen berücksichtigt werden können. Das in Fig. 4 dargestellte Ausführungsbeispiel geht von dem in Fig. 2 dargestellten Ausführungsbeispiel aus und ist zusätzlich mit Schaltmitteln versehen, welche zur Berücksichtigung der Prioritätsklassen benötigt werden.

Hierzu speichert jede Mobilstation zusätzlich zur Speicherung der Rufschlitznummer in dem Register 32 die Priorität ihres Zugriffswunsches in einem zweiten Register 35. Der Ausgang des Registers 35 ist mit dem Eingang eines zweiten Vergleichers 36 verbunden. Die Zugriffswünsche werden von der Mobilstation gemäß ihrer Priorität und innerhalb einer Prioritätsklasse nach der Reihenfolge ihres Eingangs bearbeitet. Hierzu wird in der Zugriffsberechtigung gleichzeitig die Priorität des betreffenden Zugriffes angegeben. Die in der Zugriffsberechtigung enthaltene Prioritätsklasse wird von der im Empfangsteil 1 enthaltenen Auswerteeinrichtung ermittelt und über einen Ausgang PK einem zweiten Eingang des zweiten Vergleichers 36 zugeführt. Ein Verlust des eigenen Zugriffswunsches wird von der Mobilstation dadurch festgestellt, daß sie eine Antwort der Basisstation empfängt, deren Rufschlitznummer größer ist als ihre gespeicherte Rufschlitznummer und zugleich die empfangene Prioritätsklasse niedriger oder gleich der gespeicherten Prioritätsklasse ist. In diesem Fall wechselt die Mobilstation von ihrer Wartephase wieder in die Rufphase. Hierzu sind die Ausgänge des Vergleichers 33 und des zweiten Vergleichers 36 jeweils mittels eines UND-Gatters 37, 38 verknüpft.

## Patentansprüche

1. Verfahren zum Erteilen einer Zugriffsberechtigung für ein Nachrichtenübertragungssystem, insbesondere ein Funkübertragungssystem mit mindestens einer zentralen Einrichtung und mit einer Vielzahl voneinander unabhängiger Teilnehmerstationen (1, 2, 3), wobei eine Teilnehmerstation nach Aussenden eines Zugriffswunsches eine von der zentralen Einrichtung zu erteilende Zugriffsberechtigung erwartet,
dadurch gekennzeichnet,
daß die Teilnehmerstation (1, 2, 3) ihren Zugriffswunsch wiederholt, sobald festgestellt wird, daß eine andere Teilnehmerstation (1, 2, 3), die ihren Zugriffswunsch später abgesandt hat, eine Zugriffsberechtigung erhält.

2. Verfahren nach Anspruch 1,
dadurch gekennzeichnet,
daß bei Anwendung unterschiedlicher Prioritätsberechtigungen die Teilnehmerstation (1, 2, 3) den Zugriffswunsch wiederholt, sobald sie feststellt, daß eine andere Teilnehmerstation (1, 2, 3) mit gleicher oder niedrigerer Priorität, die ihren Zugriffswunsch später abgesandt hat, eine Zugriffsberechtigung erhält.

3. Verfahren nach einem der Ansprüche 1 oder 2,
dadurch gekennzeichnet,
daß zwischen dem Empfang des Zugriffswunsches und der Erteilung der Zugriffsberechtigung eine vorgebbare Zeitspanne liegt.

4. Verfahren nach einem der Ansprüche 1 bis 3,
dadurch gekennzeichnet,
daß die Teilnehmerstation (1, 2, 3) bei Aussendung eines Zugriffswunsches eine Kennzeichnung speichert, welche den Zeitrang ihres Zugriffswunsches innerhalb der Reihenfolge der auf dem Organisationskanal erfolgenden Zugriffswünsche weiterer Teilnehmer angibt.

5. Verfahren nach einem der Ansprüche 1 bis 4,
dadurch gekennzeichnet,
daß der Organisationskanal in numerierten Zeitschlitzenorganisiert ist und daß die Teilnehmerstation (1, 2, 3) als Kennzeichnung eine Zeitschlitznummer in einem Register (32) speichert, wobei diese Zeitschlitznummer der Nummer des Zeitschlitzes entspricht, in welchem die Teilnehmerstation (1, 2, 3) ihren Zugriffswunsch ausgesandt hat.

6. Verfahren nach Anspruch 5,
dadurch gekennzeichnet,
daß die Zugriffsberechtigung zur Kennzeichnung der Position der Zugriffswünsche eine Berechtigungszahl enthält, wobei diese Berechtigungszahl jeweils der Zeitschlitznummer entspricht in welchem die Teilnehmerstation (1, 2, 3) ihren Zugriffswunsch abgesandt hat.

7. Verfahren nach einem der Ansprüche 5 oder 6,
dadurch gekennzeichnet,
daß in der Teilnehmerstation (1, 2, 3) ein erster Vergleicher (33) die in empfangenen Zugriffsberechtigungen enthaltenen Berechtigungsnummern mit der gespeicherten Zeitschlitznummer vergleicht.

8. Verfahren nach einem der Ansprüche 1 bis 4,
dadurch gekennzeichnet,
daß die Zugriffsberechtigung eine aus der Zahl der Zeitschlitze, welche zwischen dem Empfang eines Zugriffswunsches und dem Absenden dieser Zugriffsberechtigung liegen, abgeleitete Zahl enthält.

9. Verfahren nach Anspruch 8,
dadurch gekennzeichnet,
daß die Teilnehmerstation (1, 2, 3) einen Zähler (34) enthält, welcher die seit Aussendung eines Zugriffswunsches verstrichenen Zeitschlitze zählt, und daß ein in der Teilnehmerstation (1, 2, 3) angeordneter erster Vergleicher (33) den Zählerstand des Zählers mit den in einer Zugriffsberechtigungen enthaltenen Zahl vergleicht.

10. Verfahren nach einem der vorangegangenen Ansprüche,
dadurch gekennzeichnet,
daß die zentrale Einrichtung in Zeiten mit geringer Anzahl von empfangenen Zugriffswünschen einen nicht vorhandenen Teilnehmer betreffend Zugriffsberechtigung aussendet.

11. Verfahren nach einem der Ansprüche 1 bis 10,
dadurch gekennzeichnet,
daß die Teilnehmerstation (1, 2, 3) eine Zeitgeberschaltung enthält, welche mit der Aussendung des Zugriffswunsches gestartet wird und daß nach Ablauf der mittels der Zeitgeberschaltung vorgegebenen Zeit ein weiterer Zugriffswunsch ausgesandt wird, wenn in der Zwischenzeit noch keine Zugriffsberechtigung empfangen wurde.

12. Verfahren nach einem der Ansprüche 2 bis 7,
dadurch gekennzeichnet,
daß in einem zweiten Register (35) eine Zugriffspriorität gespeichert wird, welche mittels eines zweiten Vergleichers (36) mit einer in der empfangenen Zugriffsberechtigung enthaltenen Priorität verglichen wird und die Vergleichsergebnisse des ersten Vergleichers (33) und des zweiten Vergleichers (36) in Verknüpfungsgliedern (37, 38) logisch verknüpft werden.

13. Verfahren nach einem der vorangegangenen Ansprüche,
dadurch gekennzeichnet,
daß das Verfahren in einem Funkfernsprechnetz, insbesondere einem Mobilfunksystem, in einem Satellitenkommunikationssystem oder in einem aus miteinander vernetzten Computern gebildeten "Local Area Network" angewendet wird.

## Claims

1. Method for granting access authorization for an information transmission system, in particular a radio transmission system having at least one central device and having a multiplicity of mutually independent subscriber stations (1, 2, 3), a subscriber station waiting, after it transmits an access request, for access authorization to be granted by the central device, characterized in that the subscriber station (1, 2, 3) repeats its access request as soon as it is found that another subscriber station (1, 2, 3) which sent its access request later has received access authorization.

2. Method according to Claim 1, characterized in that, when different priority authorizations are used, the subscriber station (1, 2, 3) repeats the access request as soon as it is found that another subscriber station (1, 2, 3) with the same or lower priority which sent its access request later has received access authorization.

3. Method according to one of Claims 1 or 2, characterized in that there is a time interval which can be predetermined between receiving the access request and granting the access authorization.

4. Method according to one of Claims 1 to 3, characterized in that, when it transmits an access request, the subscriber station (1, 2, 3) stores an identification which indicates the timing of its access request within the sequence of access requests made on the organization channel by other subscribers.

5. Method according to one of Claims 1 to 4, characterized in that the organization channel is organized in numbered time slots, and in that the subscriber station (1, 2, 3) stores a time slot number as identification in a register (32), this time slot number corresponding to the number of time slot in which the subscriber station (1, 2, 3) transmitted its access request.

6. Method according to Claim 5, characterized in that the access authorization contains an authorization number in order to identify the position of the access requests, this authorization number in each case corresponding to the time slot number in which the subscriber station (1, 2, 3) sent its access request.

7. Method according to one of Claims 5 or 6, characterized in that a first comparator (33) in the subscriber station (1, 2, 3) compares the authorization numbers contained in received access authorizations with the stored time slot number.

8. Method according to one of Claims 1 to 4, characterized in that the access authorization contains a number which is derived from the number of time slots which occur between receipt of an access request and the sending of this access authorization.

9. Method according to Claim 8, characterized in that the subscriber station (1, 2, 3) contains a counter (34) which counts the time slots which have passed since transmission of an access request, and in that a first comparator (33), which is arranged in the subscriber station (1, 2, 3), compares the count of the counter with the number which is contained in an access authorization.

10. Method according to one of the preceding claims, characterized in that, in times when the number of received access requests is low, the central device transmits an access authorization relating to subscribers who are not present.

11. Method according to one of Claims 1 to 10, characterized in that the subscriber station (1, 2, 3) contains a time transmitter circuit which is started on transmission of the access request, and in that, once the time which is predetermined by means of the time transmitter circuit has elapsed, a further access request is transmitted if no access authorization has yet been received in the meantime.

12. Method according to one of Claims 2 to 7, characterized in that a second register (35) is used to store an access priority which is compared by means of a second comparator (36) with a priority which is contained in the received access authorization, and the comparison results of the first comparator (33) and of the second comparator (36) are logically combined in logic devices (37, 38).

13. Method according to one of the preceding claims, characterized in that the method is used in a radio telephone network, in particular a mobile radio system, in a satellite communications system or in a local area network formed from computers that are networked to one another.

## Revendications

1. Procédé pour accorder une autorisation d'accès dans un système de communication, en particulier dans un système de radiocommunication avec au moins un équipement central et avec une multiplicité de stations d'abonnés (1, 2, 3) indépendantes les unes des autres, une station d'abonné attendant une autorisation d'accès, devant être accordée par l'equipement central, après l'émission d'une demande d'accès,
caractérisé en ce que la station d'abonné (1, 2, 3) réitère sa demande d'accès dès qu'on constate qu'une autre station d'abonné (1, 2, 3), qui a émis sa demande d'accès plus tard, obtient une autorisation d'accès.

2. Procédé selon la revendication 1,
caractérisé en ce que la station d'abonné (1, 2, 3) réitère sa demande d'accès par l'application de différentes autorisations de priorité dès qu'elle constate qu'une autre station d'abonné (1, 2, 3) de priorité égale ou inférieure, qui a émis sa demande d'accès plus tard, obtient une autorisation d'accès.

3. Procédé selon l'une quelconque des revendications 1 ou 2,
caractérisé en ce qu'un laps de temps prédéfini s'écoule entre la réception de la demande d'accès et l'accord de l'autorisation d'accès.

4. Procédé selon l'une quelconque des revendications 1 à 3,
caractérisé en ce que lors de l'émission d'une demande d'accès, la station d'abonné (1, 2, 3) mémorise un marquage qui indique l'ordre chonologique de sa demande d'accès à l'intérieur de la succession des demandes d'accès d'autres utilisateurs ayant lieu sur le canal d'organisation.

5. Procédé selon l'une quelconque des revendications 1 à 4,
caractérisé en ce que le canal d'organisation est organisé en intervalles de temps numérotés et en ce que la station d'abonné (1, 2, 3) mémorise, dans un registre (32), un numéro d'intervalle de temps comme marquage, ce numéro d'intervalle de temps dans lequel la station d'abonné (1, 2, 3) a émis sa demande d'accès.

6. Procédé selon la revendication 5,
caractérisé en ce que l'autorisation d'accès contient un numéro d'autorisation pour marquer la position des demandes d'accès, ce numéro d'autorisation correspondant respectivement au numéro de l'intervalle de temps dans lequel la station d'abonné (1, 2, 3) a émis sa demande d'accès.

7. Procédé selon l'une quelconque des revendications 5 ou 6,
caractérisé en ce que dans la station d'abonné (1, 2, 3), un premier comparateur (33) qui compare les numéros d'autorisation contenus dans les autorisations d'accès reçues, avec les numéros d'intervalles de temps mémorisés.

8. Procédé selon l'une quelconque des revendications 1 à 4,
caractérisé en ce que l'autorisation d'accès contient un numéro qui découle du numéro d'intervalle de temps qui se trouve entre la réception d'une demande d'accès et l'émission de cette autorisation d'accès.

9. Procédé selon la revendication 8,
caractérisé en ce que la station d'abonné (1, 2, 3) contient un circuit d'horloge (34) qui compte les intervalles de temps qui se sont écoulés depuis l'émission d'une demande d'accès, et en ce qu'un premier comparateur (33), disposé dans la station d'abonné (1, 2, 3), compare l'état de comptage du compteur avec le nombre contenu dans une autorisation d'accès.

10. Procédé selon l'une quelconque des revendications précédentes,
caractérisé en ce que dans des périodes recevant un faible nombre de demandes d'accès, l'équipement central émet une autorisation d'accès concernant un abonné absent.

11. Procédé selon l'une quelconque des revendications 1 à 10,
caractérisé en ce que la station d'abonné (1, 2, 3) contient un circuit d'horloge qui démarre avec l'émission de la demande d'accès, et en ce qu'une autre demande d'accès est émise, après écoulement du temps prédéfini au moyen du circuit d'horloge, si aucune autorisation d'accès n'a encore été reçue entre-temps.

12. Procédé selon l'une quelconque des revendications 2 à 7,
caractérisé en ce qu'on mémorise dans un second registre (35), une priorité d'accès qui est comparée au moyen d'un second comparateur (36) avec une priorité contenue dans l'autorisation d'accès reçue et les résultats des comparaisons du premier comparateur (33) et du second comparateur (36) sont associés au niveau logique dans des éléments de jonction (37, 38).

13. Procédé selon l'une quelconque des revendications précédentes,
caractérisé en ce que le procédé s'applique à un réseau de radiotéléphonie, en particulier à un système de radio mobile, à un système de communication par satellites ou à un "Local Area Network" formé d'ordinateurs reliés en réseau.
